# EUROPEAN PATENT APPLICATION

(11) **EP 1 627 794 A2**
(43) Date of publication of application: **22.02.2006**
(21) Application number: 05381041.2
(22) Date of filing: 05.08.2005
(51) Int. Cl.: B62B 9/08

(54) **Baby chair**

(30) Priority: 19.08.2004 ES 200402039 U
(71) Applicant: David, Martin Bermejo, 48940 Vizcaya (ES)
(72) Inventor: David, Martin Bermejo, 48940 Vizcaya (ES)

(57) **Abstract**

The following invention consist of a baby chair wheel blockage device by electronic means and through sensors, the absence of both hands would trigger the automatic blockage of the wheels, as well as the centring of the front wheels, given that as a whole, it guarantees absolute immobilization, lateral as well as frontal. Once there is contact again with the handle bars the wheels unblock automatically.

The baby chair electronic blockage device, uses servo-engines or electro-mechanic triggers as blocking elements, also an electronic circuit which detects the presence of both hands on the sensors, these are located either in the interior or exterior of both handle bars.

Also, the invention presents an electronic gradual retention device, which will help to determine the baby chair stoppage level when going down hill, to provide greater comfort.

This same invention has a front wheel centring system through a servo engine or electro-mechanic trigger, this is triggered by one or more switches located at the handle bars.

## Description

### INVENTION'S OBJETIVE

The present invention, as it is announced on this descriptive memory, refers to an electronic device for baby chairs, this device has sensors placed at the handle bars of the chair, the moment in which both hands are not detected, it blocks the wheels automatically as a response.

The absence of both hands would cause a permanent blockage and as a result, the chair would remain immobilised, providing absolute safety to the baby, once the hands are in contact again with the handlebars, the device will unblock automatically. On the top of that, the device has a manual retention mode through electric switches located in both handle bars.

It also has a front wheels automatic centring feature to push the chair in a straight line, or if going down hill with a considerable inclination, the front wheels would block, allowing only a centred straight direction, this would allow to move without a tendency for the baby chair to swing in any other direction. This mode can be turned on and off through electric switches located in both handle bars.

This invention, also has an up/down hill retention feature, to graduate the stoppage level desired through its own servos or electro-mechanic triggers in place, they are triggered by a cursor key, this key can be either finger pressed or rotator and it would establish the retention level desired.

### PREVIOUS INVENTIONS

There are baby chairs with wheel blockage through a bar or manually, also, front wheel centring systems exist in some models, however these are mechanic and manually manipulated through wire, the difference is that these chairs do not have electronic/automatic safety feature that blocks the wheels when the hands are not sensed, and a feature that regulates the retention level when dealing with hills, this feature in itself provide incredible comfort when one is going down hill with the baby chair.

### INVENTION DESCRIPTION

The baby chair electronic blockage device, uses servo-engines or electro-mechanic triggers as blocking elements, also an electronic circuit which detects the presence of both hands on the sensors, these are located either in the interior or exterior of both handle bars.

The absence of both hands would trigger the automatic blockage of all wheels, as well as the centring of the front wheels, given that as a whole, it guarantees absolute immobilization, lateral as well as frontal.

The gradual retention device is, along with the circuit and the servo-engines or electro-mechanic triggers, the one in charge to determine the chair retention level when going down hill, to provide greater comfort.

The device is powered with batteries that provide the energy required to feed the circuit and its components, all together, the power system and the circuit would have a charge meter, showing the charge level and a plug to re-charge.

The batteries and the circuit guarantee considerable savings to the circuit maintenance. It is possible to auto-retrieve from the chair to take it home, avoid thieving or simply to re-charge at home. The whole system works under simple tension, it is not harmful to people or animals and it is protected to withstand different weather conditions.

### DRAWING'S DESCRIPTION

To complete the description and with the objective of helping towards a better understanding of the invention's different characteristics, a set of drawings in order to illustrate but not to limit its characteristics is integrated in the description to ilustrate the invention and represent the following.and the other is a blocking and retention piece.

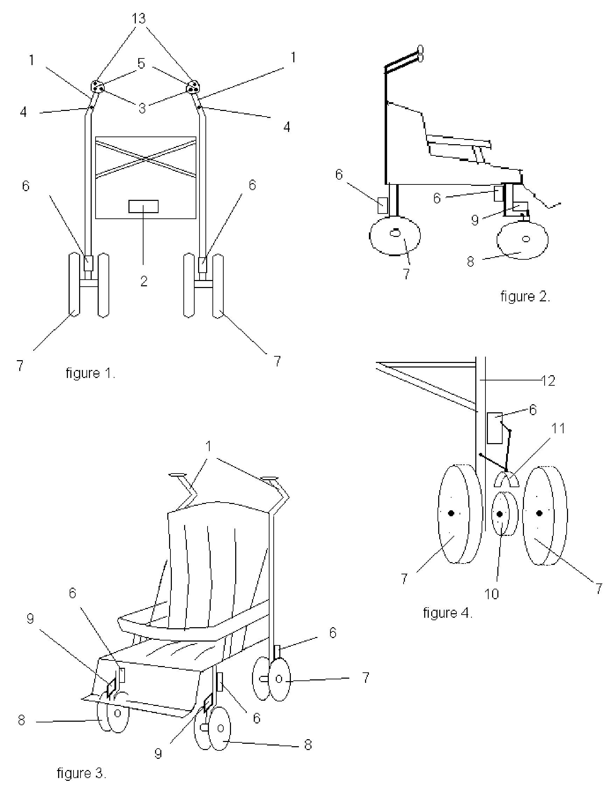

**The figure 1.**-Shows the baby chair back view, it is possible to appreciate the electric switches on the handle bars and the blocking servo-engines.
**The figure 2.**-Shows the baby chair lateral view, here, it is possible to appreciate the back and front servo blockers.
**The figure 3.**-Shows a frontal view.
**The figure 4.**-Shows a lateral view in which the retention elements can be appreciated.

### PREFERENT REALISATION MODE

### Reference explanation

1.-Handle bars.
2.-Electronic circuit.
3.-Electric switch.
4.-Hand sensors.
5.-Electric switch.
6.-Servo-engines, Back and Front.
7.-Back wheels.
8.-Front wheels.
9.-Front centring servo-engines.
10.-Mobile cylinder piece
11.-Piece for brake and retention
12.-Chair chassis.
13.-Retention leveller.(regulation)

The circuit (2) controls the hand presence through sensors (4) on handle bars (1), when both hands are absent, the circuit blocks the wheels automatically (7), or (7) and (8), through servo-engines (6). It is also responsible to unblock when hands are detected again. The chair can also have its wheels blocked or unblocked manually through the electric switch (3). Another electric switch (5) blocks the wheel centring (8) manually, through servo-engine (9), when dealing with terrain with a considerable inclination, to avoid the chair from deviating to its laterals. It also has a gradual retention device (13) when pushing the chair down hill.

## Claims

1. Baby chair electronic brake and gradual retention device, **characterized by** :
In every part of the baby chair there is an electronic circuit (2), responsible for controlling all logical actions and functions.

2. Baby chair electronic brake and gradual retention device, as stated previously, **characterized by** :
Carrying sensors (4) in any part of the handle bars (1). The sensors (4), when no detecting the presence of the hands, are responsible, through a circuit (2) for blocking the wheels (7) and (8) or only (7), through the triggering of one or two servo-engines (6) or electro-mechanic triggers (6).

3. Baby chair electronic brake and gradual retention device, as stated previously, **characterized by** :
One or two servos located at the front wheels (8) electro-mechanic triggers (9), responsible for the centring of the wheels.

4. Baby chair electronic brake and gradual retention device, as stated previously, **characterized by** :
In any part of the baby chair there are electric switches (3), these are responsible for centring the front wheels (8). Other electric switches (5), located in any part of the baby chair will block and unblock manually and permanently the wheels (7) and (8) or only (7), triggered through a circuit (2) by the servo-engines (6).

5. Baby chair electronic brake and gradual retention device, as stated previously, **characterized by** :
The existence of a down hill gradual retention device, which has the mission of providing a gradual retention level on the wheels (7) and (8), triggered through the servo-engines or electro-mechanic triggers (6), at the same time, the retention level is regulated through one or more keys or electronic wheels (13), they are responsible for regulating the retention level when going down hill, through circuit (2) in both sides of the baby chair.

6. Baby chair electronic brake and gradual retention device, as stated previously, **characterized by** :
The gradual retention feature that the invention has, works through the friction of two pieces, one is mobile (10), which turns around in circulate motion with the wheel, and the other is a blocking and retention piece (11) which is attached to the chair chassis and performs the retention through a servo engine or electro-mechanic trigger (6).
